# FASCICULE DE BREVET EUROPEEN

(11) **EP 1 702 268 B1**
(45) Date de publication et mention de la délivrance du brevet: **14.11.2018**
(21) Numéro de dépôt: 04821239.3
(22) Date de dépôt: 16.12.2004
(51) Int. Cl.: G06F 11/28

(54) **PROCEDE DE CONTROLE D'INTEGRITE D'EXECUTION DE PROGRAMMES PAR VERIFICATION D'EMPREINTES DE TRACES D'EXECUTION**
VERFAHREN ZUR STEUERUNG DER PROGRAMMAUSFÜHRUNGSINTEGRITÄT DURCH VERIFIZIEREN VON AUSFÜHRUNGS-TRACE-ABDRÜCKEN
METHOD FOR CONTROLLING PROGRAM EXECUTION INTEGRITY BY VERIFYING EXECUTION TRACE PRINTS

(30) Priorité: 31.12.2003 FR 0315633
(43) Date de publication de la demande: 20.09.2006
(73) Titulaire: Trusted Logic, 92190 Meudon (FR)
(72) Inventeur: BOLIGNANO, Dominique, F-78810 Feucherolles (FR); LEROY, Xavier, F-78000 Versailles (FR); MARLET, Renaud, F-33000 Bordeaux (FR)
(74) Mandataire: Delaval, Guillaume Laurent
(86) Numéro de dépôt international: PCT/FR2004/003273
(87) Numéro de publication internationale: WO 2005/073859

(56) Documents cités:
- EP-A- 0 606 802
- WO-A-00/54155
- FR-A- 2 841 015

## Description

La présente invention a pour objet un procédé de contrôle d'intégrité d'exécution de programmes par vérification d'empreintes de traces d'exécution.

Elle s'applique notamment au contrôle d'intégrité d'exécution de programmes, ladite exécution de programmes mettant à jour une empreinte représentative du chemin d'exécution et/ou des données manipulées, sachant qu'en des points déterminés du programme, la valeur courante de l'empreinte est comparée à une valeur attendue.

Certains petits systèmes embarqués, comme par exemple les cartes à puce, sont conçus pour protéger les données et programmes qu'ils contiennent. En particulier, le support matériel de ces systèmes rend très difficile l'observation et la modification des données stockées, y compris lors de l'exécution des programmes.

La protection n'est toutefois pas totale. Ces systèmes peuvent être exposés à des actions malveillantes (aussi appelées « attaques ») qui visent à altérer le bon fonctionnement du système et des programmes, ou à dévoiler des informations confidentielles. Des attaques physiques (aussi dites matérielles) sont par exemple des perturbations de l'alimentation électrique, des bombardements par des rayonnements, la destruction de portes logiques, etc.

De telles attaques peuvent conduire à des dysfonctionnements du programme exécuté sur la carte : les instructions et les données lues depuis la mémoire peuvent être incorrectes, et le processeur peut exécuter incorrectement certaines instructions. De telles perturbations peuvent rendre invalide du code qui vérifie des conditions de sécurité avant d'opérer certaines actions sensibles.

La publication de demande de brevet français FR2841015A divulgue un procédé de contrôle d'exécution d'un programme.

Soit l'exemple (simplifié) du code suivant, écrit en langage C :

```
 if (! conditionl ()) goto error ;
 if ( ! condition2 ()) goto error ;
 do sensitive action () ;
```

L'action sensible « dosensitiveaction () » n'est normalement exécutée que si les deux conditions « condition () » et « condition2 () » sont satisfaites.

Néanmoins, des perturbations physiques peuvent amener le processeur à sauter directement par-dessus le code des deux « if » ou à lire depuis la mémoire une série d'instructions différentes du code des deux « if ». Dans ce cas, le processeur peut exécuter « do sensitive action () » même si les tests « conditionl () » et « condition2 () » ne sont pas satisfaits.

Une technique connue pour « durcir » un programme contre ce genre d'attaques consiste à introduire de la redondance entre le flot de contrôle du programme et les valeurs de certaines variables auxiliaires. En d'autres termes, on utilise des variables auxiliaires pour garder trace du fait que l'exécution est bien passée par toutes les vérifications de conditions de sécurité. Dans le cas de l'exemple ci-dessus, on pourrait écrire :

```
       trace = 0;
        if (condition1()) trace |= 1; else goto error;
        if (condition2()) trace |= 2; else goto error;
        if (trace == 3) do_sensitive_action();
```

Ainsi, si les deux premiers « if » ne sont pas exécutés correctement, il y a de bonnes chances que la variable « trace » ne soit pas égale à 3 à la fin, et que l'action « do_sensitive_action() » ne soit donc pas exécutée.

Même dans ce cas, une perturbation pourrait faire en sorte que le test « trace == 3 » soit toujours vrai ou soit lui aussi ignoré. De manière générale, pour la pertinence de l'invention présentée ici, on fait l'hypothèse que les perturbations causées par des attaques physiques sont relativement grossières : elles peuvent inactiver l'exécution d'une partie du programme ou changer le contenu apparent d'une partie de la mémoire, mais l'étendue de cette partie n'est pas contrôlable finement par l'attaquant.

Cette approche peut se généraliser de la manière suivante. Le programme tient à jour une valeur représentative des points de contrôle importants par lesquels passe son exécution. Cette valeur peut être une empreinte (un « hash »), par exemple une somme de contrôle (« checksum »), calculée sur des entiers qui caractérisent ces points de contrôle importants. Avant d'exécuter une opération sensible, cette valeur mise à jour en cours d'exécution peut être comparée à sa valeur normale (attendue), précalculée manuellement par le programmeur à partir de la structure de contrôle du programme. Par exemple :

```
        trace = 42;
        for (i = 0; i < 4; i++) {
              if (provided_pin[i] != actual_pin[i]) goto error;
              trace = h(trace, i);
        }
        if (trace == 2346) do_sensitive_action();
```

Il faut cependant noter que ce n'est pas ainsi qu'une vérification de code PIN est habituellement codée ; il s'agit juste ici d'un exemple illustratif de l'usage du calcul d'empreinte.

L'opérateur de hachage utilisé ici est la congruence linéaire « h(t,x) = ((33 * t) mod (2^16)) xor x » où :
- « a * b » représente le produit de « a » par « b »,
- « a mod b » représente le reste de la division de « a » par « b » (c'est-à-dire le modulo),
- « a ^ b » représente l'élévation de « a » à la puissance « b »,
- « a xor b » est l'opération « ou logique exclusif » sur les bits représentant « a » et « b ».

La valeur 2346 n'est autre que « h(h(h(h(42, 0), 1), 2), 3) », c'est-à-dire l'empreinte de l'exécution normale de la boucle (4 tours pour « i » variant de 0 à 3). Si la boucle n'est pas exécutée ou si elle se termine anormalement avant d'avoir fait 4 tours, la valeur de la variable « trace » avant l'appel de « do_sensitive_action() » sera très probablement différente de 2346.

On peut voir cet opérateur de hachage « h » comme un opérateur qui permet de calculer incrémentalement une fonction de hachage « H » qui opère sur des séquences d'entiers qui caractérisent lesdits points de contrôle importants. Cette fonction de hachage sur les séquences d'observations est définie par : « H(T₀, i₁, i₂, ..., iₙ) = h(...h(h(T₀, i₁), i₂)..., iₙ) ».

Pour pouvoir être utilisée dans des petits systèmes embarqués disposants de faibles capacités de calcul, l'opérateur de hachage «h» doit être rapide à calculer. De plus, la fonction de hachage « H » résultante doit aussi être résistante aux pré-images : la probabilité pour que l'empreinte « H(T₀, i₁, ..., iₙ) » d'une séquence aléatoire « T₀, i₁, ..., iₙ » soit égale à une valeur donnée doit être faible (de l'ordre de 2^{-B} où B est le nombre de bits pour coder la valeur de l'empreinte.)

Dans certains cas décrits ci-dessous, il pourra aussi être utile de disposer d'un opérateur de hachage « h » qui soit inversible en son premier argument : pour toutes valeurs « t' » et « x », il existe « t » tel que « t' = h(t, x) ».

On peut par exemple utiliser pour « h » une congruence linéaire, comme c'est le cas dans l'exemple donné ci-dessus. Cette congruence linéaire a de plus la propriété d'inversibilité. Plus généralement, on peut utiliser n'importe quelle fonction qui combine les opérations suivantes : addition, soustraction, ou logique exclusif (xor) avec une constante ou avec « x » ; rotation d'un nombre constant de bits ; multiplication par une constante impaire.

On peut utiliser également une fonction de contrôle de redondance cyclique (CRC), comme par exemple CRC-16 ; une telle fonction peut être calculée de manière efficace à l'aide de tables précalculées.

En revanche, même si une somme de contrôle (checksum, définie comme la somme des entiers passés en argument) a bien les bonnes propriétés de rapidité de calcul, de résistance aux pré-images, et d'inversibilité, elle est peu satisfaisante car la fonction de hachage obtenue est insensible à l'ordre des arguments.

À l'autre extrémité du spectre se trouvent des fonctions de hachage cryptographiques (digests, comme SHA-1, MD-5, etc.) qui sont très sûres mais aussi coûteuses à calculer.

La prise d'empreinte peut se décrire à l'aide de deux opérations principales d'affectation et de mise à jour d'empreinte : « setTrace(T) » fixe la valeur initiale de l'empreinte à « T » (typiquement, une valeur quelconque), et « addTrace(N) » ajoute à la trace un entier « N » caractéristique d'une observation de l'exécution du programme. Dans l'exemple ci-dessus, « setTrace(T) » correspond à l'affectation « trace = T; » et « addTrace(N) » correspond à la mise à jour de l'empreinte par « trace = h(trace, N) ».

La valeur « N » fournie lors d'une opération « addTrace(N) » peut elle-même être le résultat d'une fonction de hachage. Plus l'entier « N » est représentatif de l'exécution locale du programme, c'est-à-dire plus « N » varie en présence d'une perturbation possible de l'exécution, meilleur est le pouvoir de détection d'une attaque.

La vérification d'empreinte peut se décrire à l'aide d'une unique opération : « checkTrace(T) » vérifie que la valeur courante de l'empreinte est bien « T ». Dans le cas contraire, c'est une indication que le programme a subi une attaque. En toute rigueur, des systèmes comme des cartes à puce s'usent et une différence d'empreinte pourrait aussi être le signe d'une défaillance matérielle.

Dans tous les cas, le programme ne peut plus rendre le service pour lequel il est conçu. Dans des systèmes critiques, les mesures prises en cette circonstance consistent typiquement à sécuriser certaines données du programme et à interrompre, définitivement ou non, son exécution. Lorsque c'est matériellement possible, un signal sonore ou visuel peut en outre avertir l'utilisateur du dysfonctionnement.

Au vu de l'exemple ci-dessus, il est manifeste que la mise en oeuvre de cette technique demande beaucoup d'efforts de la part du programmeur, d'une part pour insérer les étapes de calcul de l'empreinte, de l'autre pour calculer les valeurs attendues de l'empreinte aux points où elle devra être vérifiée.

Compte tenu des problèmes précédemment évoqués, l'invention a plus particulièrement pour but la généralisation de cette technique et son automatisation.

A cet effet, elle propose un procédé de contrôle d'intégrité d'exécution de programmes par vérification d'empreintes de traces d'exécution, ladite empreinte étant une valeur représentative des points de contrôle déterminés par lesquels passe l'exécution dudit programme, ce procédé comportant le calcul de la valeur numérique de l'empreinte, la comparaison de cette valeur à une valeur attendue et la réalisation d'un traitement particulier dans le cas où ladite valeur de l'empreinte diffère de la valeur attendue, caractérisé en ce qu'il comprend:
- l'affectation d'une valeur initiale à l'empreinte,
- la mise à jour de l'empreinte d'un chemin d'exécution,
- l'ajustement de l'empreinte le long des chemins d'exécution avant d'atteindre certains points de convergence du flot de contrôle de manière à rendre égales les empreintes des chemins convergents,
- la comparaison de ladite empreinte calculée dynamiquement à une valeur attendue fixée statiquement, égale à la valeur que doit avoir l'empreinte si l'exécution du programme n'est pas perturbée en des points déterminés du programme,
- la réalisation d'un traitement particulier dans le cas où l'empreinte courante diffère de la valeur attendue, ledit traitement particulier du programme dans le cas où l'empreinte courante diffère de la valeur attendue consistant à sécuriser certaines données ou à avertir l'utilisateur du dysfonctionnement par un signal sonore ou visuel ou à interrompre, définitivement ou non, l'exécution dudit programme.

Ce procédé pourra prendre en compte :
- que ladite empreinte ne porte que sur des fragments de code critiques du programme,
- que les valeurs attendues de l'empreinte en des points donnés du programme sont déterminées par une analyse statique de programme qui modifie éventuellement le code de programme pour rendre les valeurs d'empreinte prévisibles.

Ce procédé et ses perfectionnements sont décrits plus en détail ci-après à titre d'exemples non limitatifs.

L'analyse de programme pour la détermination des valeurs d'empreinte attendues peut se décomposer en plusieurs étapes. On considère tout d'abord le cas d'une routine (méthode, sous-programme, etc.) du programme.

Dans le cas où toutes les instructions séparant le début de la routine d'un point de contrôle d'empreinte sont linéaires, c'est-à-dire ne contiennent pas de branchements, la valeur attendue de l'empreinte est simplement « h(...h(h(T₀, i₁), i₂)..., iₙ) » où « T₀ » est la valeur initiale de l'empreinte et où « i₁,..., iₙ » sont les entiers représentatifs de l'exécution au divers points d'observation sur le chemin d'exécution.

Plus généralement, étant donné une décomposition d'une routine sous forme d'un graphe de blocs de base (basic blocks), si l'on connaît statiquement la valeur de l'empreinte au début d'un bloc de base, on connaît de la même manière sa valeur en tout point du bloc.

Lorsque plusieurs chemins d'exécution différents mènent en un même point de programme, il n'est pas possible de prédire « 1a » valeur d'empreinte attendue en ce point de programme puisqu'il y en a en fait plusieurs. Dans ce cas, on « égalise » les valeurs de l'empreinte aux points de jointure dans le flot de contrôle : sur chaque branche qui mène au point de jointure (sauf éventuellement une des branches), on ajoute à l'empreinte courante une valeur constante telle que l'empreinte résultante est la même pour chaque branche, une fois atteint le point de jointure. Cette addition peut se faire explicitement dans le code, par exemple par opération directe sur la valeur de l'empreinte ou par appel à une routine dédiée. Soit par exemple le programme suivant :

```
        if (cond) {
              addTrace(1); ...
              addTrace(2);
        } else {
              addTrace(3); ...
              addTrace(4);
        }
```

Si l'empreinte a la valeur « T₀ » avant le « if », elle aura respectivement les valeurs « h(h(T₀, 1), 2) » et « h(h(T₀, 3), 4) » à la fin de chacune des deux branches de ce « if ». Pour établir un point de contrôle d'empreinte après ce « if », on peut égaliser les branches de la manière suivante :

```
       if (cond) {
              addTrace(1); ...
              addTrace(2);
        } else {
              addTrace(3); ...
              addTrace(4);
              adjustTrace(X);
        }
        checkTrace(Y);
```

avec les définitions suivantes :
- « adjustTrace(N) » ajoute l'entier « N » à la valeur courante de l'empreinte,
- « X » est égal à « h(h(T₀, 1), 2) - h(h(T₀, 3), 4) »,
- « Y » est égal à « h(h(T₀, 1), 2) ».

Ainsi, quel que soit le chemin d'exécution pris, l'empreinte vaudra toujours « Y » après le « if ». Le fait d'additionner la valeur « X » à la valeur courante de l'empreinte rend cette empreinte prévisible tout en préservant le fait qu'elle est difficile à falsifier. L'ajustement aurait pu être pratiqué de manière symétrique sur la première branche du « if » plutôt que sur la seconde.

Ce schéma s'applique aussi au cas des boucles dont le nombre d'itérations est indéterminé : à chaque tour de boucle, l'empreinte est ajustée pour revenir à la même valeur initiale.

L'opération d'ajustement d'empreinte « adjustTrace » s'ajoute aux opérations de mise à jour d'empreinte (« addTrace ») et d'affectation d'empreinte (« setTrace ») pour former l'ensemble des opérations de « prise d'empreinte ».

L'opération d'ajustement d'empreinte « adjustTrace(N) » n'a pas à être nécessairement une opération basée sur une opération d'addition du genre « trace = trace + N; ». Elle peut être plus généralement définie comme « trace = adjust(trace, N); » où « adjust(T, N) » est une fonction inversible en son premier argument : pour toute empreinte d'origine « T » et toute empreinte cible « T' », il suffit de savoir déterminer « N = delta(T, T') » tel que « adjust(T, N) = T' ».

On retrouve ainsi le cas de l'addition: « adjust(T, N) = T + N » et « delta(T, T') = T' - T ». Mais on peut aussi par exemple utiliser le « ou logique exclusif » : « adjust(T, N) = T xor N » et « delta(T, T') = T xor T' ».
L'ajustement d'empreinte « adjustTrace(delta(T, T')); » envoie l'empreinte « T » sur l'empreinte « T' » en préservant la difficulté de falsification.

Les gestionnaires d'exceptions (exception handlers) d'un programme rendent difficile la détermination statique des valeurs de l'empreinte. En effet, l'exécution peut se brancher au début du code du gestionnaire à partir de n'importe quelle instruction couverte par ce gestionnaire. La valeur de l'empreinte au début du code du gestionnaire n'est donc pas prévisible statiquement. La mise en place d'ajustements d'empreinte comme décrits ci-dessus pour toutes les instructions couvertes par un gestionnaire d'exception permet en principe d'assurer une valeur d'empreinte connue au début du gestionnaire. Cependant, comme le nombre d'ajustements nécessaires est grand, cela peut être coûteux en taille de code, en particulier si les ajustements sont codés explicitement par des appels de routine du type « adjustTrace(N) ». En outre, les ajustements auraient comme effet secondaire de rendre l'empreinte constante sur tout l'intervalle du code couvert par un gestionnaire d'exception. L'empreinte serait donc alors inefficace pour détecter les perturbations d'exécution.

Une solution à ce problème est de forcer l'empreinte à une valeur connue statiquement lorsque l'exécution entre dans un gestionnaire d'exceptions. Cela peut être fait par l'interprète de la machine virtuelle, lorsqu'il traite le rattrapage d'une exception. Une autre possibilité est d'insérer un appel à une routine « setTrace(T) » au début de chaque gestionnaire d'exceptions, où « T » est une valeur choisie arbitrairement ; cette routine positionne la variable « trace » à la valeur de son argument.

Avec cette solution, la propriété de contrôle d'intégrité d'exécution est localement perdue entre le fragment d'exécution qui précède le branchement et celui qui le suit. Mais elle reste globalement préservée sur l'ensemble de l'exécution du programme.

Cette méthode peut plus généralement s'appliquer à tous les points de forte convergence du flot de contrôle de la routine.

Les subroutines, dans des langages comme ceux de la machine virtuelle « Java » (JVM) ou « Java Card » (JCVM) (marques déposées par Sun Mycrosystems), posent par exemple un problème similaire. Elles peuvent en effet être appelées depuis plusieurs points du code, avec des valeurs différentes pour l'empreinte. On peut les traiter de la même manière que les gestionnaires d'exception, en forçant la valeur de l'empreinte lorsqu'on entre dans une subroutine. Les points d'appels de subroutines étant bien délimités (par exemple, instructions « jsr » de la JVM et de la JCVM) et généralement assez peu nombreux, on peut aussi les traiter comme des branchements normaux, avec insertion d'appels à « adjustTrace » avant les appels de subroutines pour garantir une même valeur de l'empreinte en tous les points d'appel d'une même subroutine.

Par ailleurs, le calcul d'empreinte et son contrôle peuvent toujours être limités à des fragments de code critiques du programme. Cela permet de réduire l'accroissement en taille du code pour introduire la redondance que représentent les opérations sur les empreintes. Cela réduit également le ralentissement dû aux calculs supplémentaires du programme.

Les opérations sur les empreintes ne modifient pas le comportement du programme (en l'absence de perturbation). Les opérations de mise à jour d'empreinte (du type « addTrace ») et d'ajustement d'empreinte (de type « adjustTrace ») se placent conceptuellement sur les arcs du graphe de flot de contrôle qui relie entre eux les points d'exécution du programme. De cette manière, la mise à jour d'empreinte et l'ajustement peuvent dépendre non seulement des points de programme parcourus en cours d'exécution mais aussi des branches spécifiques suivies, y compris dans le cas où plusieurs branches relient deux mêmes points. En pratique, dans le cas où les opérations de mise à jour et d'ajustement d'empreinte sont insérées effectivement dans le code exécutable du programme, elles sont disposées de manière à être exécutées en séquence entre les deux points de programme de l'arc sur lesquelles elles sont placées. Cette insertion peut nécessiter des modifications locales mineures du programme, comme l'ajout de branchements supplémentaires.

En revanche, les opérations d'affectation (de type « setTrace ») et de contrôle d'empreinte (de type « checkTrace ») se placent conceptuellement sur les points de programme et non sur les arcs entre ces points. La valeur de l'empreinte est en effet une propriété des points de programmes : quels que soient les chemins d'exécution menant à un point de programme donné, la valeur courante de l'empreinte (calculée dynamiquement) doit être égale à une valeur fixe attendue (connue statiquement) ; et cette valeur attendue peut être forcée par une opération d'affectation d'empreinte.

La valeur de l'empreinte en chaque point d'exécution d'une routine de programme ainsi que les ajustements à insérer pour rendre prévisible la valeur de l'empreinte peuvent être déterminés automatiquement par une analyse statique de programme qui modifie éventuellement le code du programme pour rendre les empreintes prévisibles et pour les contrôler.

On se donne pour cela une routine du programme et des informations concernant la mise à jour d'empreinte (points de programme et nature des observations de l'exécution en ce point de programme), l'affectation d'empreinte (points de programme où l'empreinte doit être forcée à certaines valeurs) et éventuellement le contrôle d'empreinte (points de programme où l'empreinte doit être contrôlée).

Les informations de mise à jour, d'affectation et de contrôle d'empreinte peuvent par exemple être données par des insertions explicites de directives (commentaires, pragmas, code effectivement exécuté, etc.) dans le code du programme. De telles directives sont considérées de manière neutre du point de vue du flot de contrôle du programme : les directives de mise à jour d'empreinte de type « addTrace » se placent entre deux points d'exécution effectifs (hors directives) du programme, et ainsi sur les arcs qui relient conceptuellement entre eux les points d'exécution du programme ; les directives d'affectation (« setTrace ») et de contrôle d'empreinte (« checkTrace ») portent sur le point d'exécution qui suit. Il en va de même pour les directives éventuellement insérées par la transformation de programme : les directives d'ajustement de type « adjustTrace » sont également neutres et se placent sur lés arcs (pour corriger la valeur d'une empreinte avant d'atteindre un point de programme), c'est-à-dire entre deux points d'exécution.

Les directives d'affectation d'empreinte peuvent avoir été placées par une transformation de programme préalable. Cette transformation peut par exemple systématiquement placer une directive de type « setTrace » en tous les points de programme où conflue un nombre de branches d'exécution supérieur à un seuil donné. De telles directives peuvent également être placées systématiquement à tous les points d'entrée des subroutines et/ou des gestionnaires d'exception.

De même, les valeurs manipulées par les directives de mise à jour d'empreinte peuvent aussi avoir été déterminées par une transformation de programme préalable. En effet, les valeurs utilisées pour cette mise à jour (argument de « addTrace ») sont en général des constantes arbitraires. Une valeur quelconque (par exemple aléatoire) peut donc être automatiquement attribuée à chaque occurrence d'une telle directive. Dans certains cas, on peut aussi vouloir exploiter des invariants du programme. On procède alors à une analyse statique du programme afin de déterminer des invariants en certains points de programme, par exemple le fait que la somme de deux variables est constante le fait qu'une variable est inférieure à un certain seuil, le fait que le nombre de tours de boucle est connu, etc. Ensuite, au lieu de mettre à jour l'empreinte en fonction de constantes, on emploie des expressions qui, bien qu'elles portent sur des données dynamiques du programme, doivent avoir une valeur constante.

Le procédé de détermination automatique des valeurs d'empreinte attendues est ensuite défini par la séquence opératoire suivante.
- Initialisation de l'ensemble des points de programme à explorer au singleton constitué de la première instruction de la routine.
- Mémorisation au point d'entrée de la routine d'une valeur d'empreinte égale à la valeur initiale donnée de l'empreinte.
- Tant que ledit ensemble des points de programme à explorer n'est pas vide :
   - Extraction d'un point de programme (le point d'origine) dudit ensemble des points de programme à explorer.
   - Pour chacun des points de programme résultants possibles après exécution de l'instruction (les points cibles) :
      Si le point cible comporte une affectation d'empreinte et si ce point cible n'a pas encore été exploré, mémorisation au point cible de la valeur d'empreinte définie par l'affectation.
      Si le point cible ne comporte pas d'affectation d'empreinte et si ce point cible a déjà été exploré, insertion entre l'instruction au point d'origine et l'instruction au point cible d'un ajustement d'empreinte qui envoie la valeur de l'empreinte au point d'origine sur la valeur de l'empreinte mémorisée au point cible.
      Si le point cible ne comporte pas d'affectation d'empreinte et si ce point cible n'a pas encore été exploré, mémorisation au point cible de la valeur de l'empreinte au point d'origine, éventuellement modifiée par une mise à jour d'empreinte s'il y en a une entre le point d'origine et le point cible.
      Si le point cible n'a pas encore été exploré, ajout dudit point cible dans ledit ensemble des points de programme à explorer.

Certains langages ne permettent pas de manipuler facilement des directives neutres du type des directives de prise et de contrôle d'empreinte décrites ci-dessus. On peut employer dans ce cas une technique qui consiste à instrumenter le code du programme avec des instructions réelles.

Par exemple, on peut insérer dans le code du programme des appels de routine explicites, aussi bien pour la mise à jour d'empreinte et l'affectation d'empreinte que pour le contrôle d'empreinte. Par exemple, on peut écrire en « Java »:

```
        { ...
              if (cond) {
                     a[i+j] = b[i];
                     addTrace();
              }
              checkTrace();
        }
        catch (Exception e) {
              setTrace(); ...
        }
```

Ce fragment de programme peut être transformé une première fois pour l'attribution de valeurs d'empreinte arbitraires pour les opérations de mise à jour et d'affectation :

```
        {if (cond) {
                    a[i+j] = b[i];
                    addTrace(28935);
              }
              checkTrace();
        }
        catch (Exception e) {
              setTrace(9056); ...
        }
```

Puis, le programme peut être transformé une seconde fois selon le procédé décrit ci-dessus pour déterminer les valeurs d'empreinte aux points de contrôle et pour insérer les ajustements nécessaires. Les valeurs attribuées par cette transformation dépendent de l'opérateur de hachage utilisé. Le fragment de programme donné en exemple ci-dessus pourra être transformé ainsi :

```
        { ...
              if (cond) {
                    a[i+j] = b[i];
                    addTrace(28935);
        }}adjustTrace(16220);
              checkTrace(13991);
        catch (Exception e) {
              setTrace(9056); ...
        }
```

Si l'on veut pouvoir compiler et exécuter le programme avant transformations, par exemple pour le mettre au point, il peut falloir adapter le programme source. En effet, si la librairie de prise et de contrôle d'empreinte ne comporte que des routines qui prennent en argument un entier, il est illégal d'écrire « checkTrace() ». Dans ce cas, on peut adopter la convention suivante : la valeur « 0 » (par exemple) dénote une valeur encore indéterminée. On écrit alors « checkTrace(0) » dans le code source initial. Après transformation, l'appel de routine deviendra par exemple « checkTrace(13991) ».

Cette technique est compatible avec la compilation du programme : les transformations de programme peuvent se faire aussi bien sur le code source que sur le code objet. Par exemple, en « Java Card », on peut écrire :

```
        checkTrace(0) ;
```

Après compilation et conversion au format d'exécution de la JCVM, on a un code objet de la forme :

```
       sconst_0
        invokestatic checkTrace
```

Le procédé de détermination automatique de la valeur attendue de l'empreinte au moment du « invokestatic » peut s'appliquer au code objet de la JCVM et produire le code suivant :

```
        sspush 13991
        invokestatic checkTrace
```

Ce procédé de détermination automatique des valeurs d'empreinte peut être combiné à une analyse de programme qui effectue dans certaines cas un déroulage des boucles et récursions du programme. On peut alors calculer automatiquement des empreintes qui portent sur des variables du programme, comme dans l'exemple ci-dessus où « trace = h(trace, i) » figure à l'intérieur de la boucle d'indice « i ».

L'empreinte peut être calculée comme indiqué ci-dessus à partir de points d'observation donnés insérés explicitement dans le code du programme. L'empreinte peut aussi être calculée automatiquement et implicitement par l'interprète d'une machine virtuelle.

En particulier, l'empreinte peut porter sur le code des instructions exécutées par la machine virtuelle. Elle permet ainsi de contrôler que l'exécution successive des instructions du programme n'est pas perturbée.

La boucle principale de l'interprète d'une machine virtuelle a généralement la forme suivante :

```
        while (1) {
              // Lecture du code de l'instruction à l'adresse pc
              opcode = *pc++;
              switch (opcode) {
              case INSTR :
                     // Sémantique de l'instruction « instr » ...
              }
        }
```

On peut instrumenter ce code ainsi :

```
        while (1) {
              opcode = *pc++;
              addTrace(opcode);
              switch (opcode) { ...
        } }
```

Pour le moment, on suppose que la variable « trace » associée à l'opération « addTrace » est, à chaque appel de routine, sauvegardée dans le bloc d'activation de la routine appelante et réinitialisée à une valeur connue « T₀ », et qu'elle est symétriquement restaurée depuis le bloc d'activation de l'appelant à chaque retour de routine. Ainsi, en un point quelconque du programme, la valeur de « trace » est « Tₙ = h(...h(h(T₀, i₁), i₂)..., iₙ) », qui est l'empreinte des codes opératoires « i₁, ..., iₙ » des instructions exécutées depuis l'entrée dans la routine courante, en ignorant les instructions des méthodes appelées.

Cette mise à jour d'empreinte implicite peut être prise en compte explicitement et automatiquement par le procédé décrit ci-dessus de détermination automatique des valeurs d'empreinte attendues. Des invariants du programme visible au niveau de la machine virtuelle peuvent en outre être utilisés pour la mise à jour d'empreinte : hauteur de la pile d'opérande, présence de valeurs de certains types dans la pile d'opérande (si la pile est typée ou si les données permettent d'identifier leur type)

Le modèle de calcul d'empreinte implicite par une machine virtuelle se transpose directement au cas d'un microprocesseur exécutant du code natif. Le microprocesseur doit pour cela être conçu pour tenir à jour l'empreinte pour chaque instruction exécutée. Dans cette approche, la variable « trace » devient un registre spécial du processeur, accédé via des instructions de type « load » et « store » (pour sauver et restaurer la valeur de la trace à l'entrée et à la sortie des procédures), « addi » et « movi » (pour corriger et initialiser la valeur de la trace).
D'un point de vue pratique, la prise d'empreinte doit être réalisée de manière à ralentir au minimum le chemin critique du processeur. Ce peut être également un mode de fonctionnement débrayable du processeur, qui permet de n'effectuer les calculs d'empreinte que dans des sections critiques du code.
Un débrayage dynamique de ce type peut également être mis en oeuvre dans le cadre d'un calcul d'empreinte implicite par une machine virtuelle.

Une autre possibilité pour accélérer le calcul d'empreinte est que le processeur dispose d'une instruction qui effectue l'opération de mise à jour « trace = h(trace, x); » en hardware. Cette instruction machine peut être utilisée aussi bien dans la boucle d'interprétation d'une machine virtuelle que dans du code natif, où elle peut être insérée automatiquement par transformation du code machine. Le processeur peut comporter également des instructions dédiées pour effectuer les opérations d'ajustements, d'affectations et de contrôle d'empreinte.

De telles instructions spécialisées peuvent également être explicitement incluses dans le jeu d'instruction d'une machine virtuelle : au lieu d'opérer explicitement sur une variable « trace » ou de faire des appels de routine du type « addTrace(N) », « setTrace(T) », « adjustTrace(N) » et « checkTrace(T) », ces opérations peuvent être réalisées par des instructions dédiées de la machine virtuelle. Le calcul d'empreinte n'est pas dans ce cas implicite : il est explicite et nécessite une instrumentation (éventuellement automatique) du programme.

L'intérêt d'une telle approche est non seulement un gain en vitesse mais aussi en taille mémoire. Ainsi, par exemple, au lieu des six octets que requièrent l'appel « checkTrace(42) » dans du code objet JCVM, seuls trois octets (un pour l'instruction et deux pour l'argument entier court) seraient nécessaires.
Dans le cas où l'empreinte est mise à jour automatiquement et implicitement par la machine d'exécution (machine virtuelle ou processeur), plusieurs perfectionnements sont envisageables.

Tout d'abord, pour diminuer le surcoût en temps d'exécution dû à la prise d'empreinte, on peut envisager de ne pas modifier l'empreinte pour certaines classes d'instructions. Ceci peut s'effectuer à l'aide d'une table qui associe à tout code d'instruction un booléen qui indique si l'instruction est à tracer. La boucle principale de l'interprète s'écrit alors de la manière suivante :

```
       while (1) {
              opcode = *pc++;
              if (update_trace[opcode])
                    trace = h(trace, opcode);
              switch (opcode) { ...
        } }
```

L'information des instructions à effectivement tracer (ici le tableau « update_trace ») peut accompagner le programme lors de son chargement et de son exécution sur la plate-forme d'exécution. Cette information peut en outre varier suivant les programmes et même suivant les différentes routines des différents programmes.

On peut également coder cette information « en dur » dans l'interprète pour les cas correspondants aux différents codes d'instruction. On a ainsi par exemple :

```
       while (1) {
              opcode = *pc++;
              switch (opcode) {
              case INSTR1 : // tracée
                    trace = h(trace, opcode); ...
              case INSTR2 : // pas tracée ...
        } }
```

Pour détecter d'éventuelles perturbations sur la valeur des arguments immédiats des instructions, on peut également les intégrer dans le calcul de l'empreinte. Par exemple, dans le cas de la JCVM, pour l'instruction « bspush n » (qui pousse la constante entière « n » sur la pile d'opérande), l'interprète peut effectuer « trace = h(h(trace, BSPUSH), n) » au lieu de simplement « trace = h(trace, BSPUSH) ».

Pour conserver la possibilité de calculer statiquement les valeurs d'empreintes, ce schéma ne peut être appliqué qu'aux instructions dont les arguments immédiats ne sont pas modifiés au moment du chargement, à l'édition de lien. Dans le cas contraire, il faut être capable d'opérer sur le programme après édition de lien. C'est par exemple possible dans le cas où le programme est inclus en mémoire morte (ROM) dans un masque de carte à puce.

Pour rendre la valeur de l'empreinte encore plus sensible au flot de contrôle effectivement suivi à l'intérieur du code d'une routine, les instructions de branchement conditionnel (par exemple « ifzero » dans la JCVM) et de branchement multiple (par exemple « stableswitch » dans la JCVM) peuvent mettre à jour la trace de manière différente suivant que le branchement conditionnel est pris ou non, ou suivant l'entrée de la table de saut qui est sélectionnée. Par exemple :

```
       switch (opcode) {
       case IFZERO:
              if (top_of_stack == 0) {
                    trace = h(trace, BRANCH_TAKEN);
                    pc += pc[0];
              } else {
                    trace = h(trace, BRANCH_NOT_TAKEN);
                    pc+= 1; } ...
```

On peut aussi voir ce perfectionnement comme la prise en compte de la valeur connue de l'expression « top_of_stack == 0 » dans chacune des branches de l'instruction « ifzero », c'est-à-dire respectivement « true » et « false ».

Dans ce qui a été décrit jusqu'à présent, l'empreinte est calculée routine par routine. Il est inutile, et potentiellement coûteux en temps d'exécution, de mettre à jour la variable « trace » lors de l'interprétation de routines qui ne vont jamais consulter la valeur de cette variable, c'est-à-dire qui ne contiennent pas d'opérations de type « checkTrace ». L'information indiquant si une routine contient une opération « checkTrace » peut facilement être déterminé par un simple examen du code de la routine.

L'interprète de la machine virtuelle peut alors être modifié comme suit :

```
       while (1) {
              opcode = *pc++;
              if (method_flags & NEEDS_TRACE)
                    trace = h(trace, opcode);
              switch (opcode) {...
        } }
```

Dans le cas particulier de la JCVM, cette information peut par exemple être calculée un fois pour toute (par exemple au chargement du programme) et enregistrée sous forme d'un bit dans le champ « flags » de la structure « method_info ».

Jusqu'ici, on a considéré l'empreinte d'exécution comme locale à chaque méthode : la variable « trace » est préservée à l'appel de routine, et sa valeur représente une empreinte des points d'observation de l'exécution à l'intérieur de la routine courante, en excluant les routines appelées. La variable « trace » peut être rendue globale, et donc contenir une empreinte de toutes les instructions exécutées, y compris à travers des appels de routines, depuis des points d'entrée connus (par exemple, les méthodes « process » et « install » d'une applet « Java Card »), où « trace » a été initialisée à des valeurs connues.

Les motivations sont doubles : d'une part la possibilité de vérifier en une seule opération « checkTrace » l'absence de perturbations dans l'exécution complète du programme, et non pas juste dans l'exécution de la routine où se trouve le « checkTrace » ; et d'autre part, dans le cas où l'empreinte est prise implicitement par la machine d'exécution, la simplification de cette machine (plus besoin de sauvegarder et de restaurer « trace » à chaque appel).
La principale difficulté de cette approche est le calcul statique des valeurs de l'empreinte en tout point du programme. Ce calcul reste possible, mais exige ou bien une analyse du programme complet (interprocédurale), ou bien l'établissement d'invariants sur les valeurs de l'empreinte au début et à la fin de chaque routine.

Dans l'approche par analyse globale, on suppose connaître, au moment de l'analyse statique, le code de toutes les routines pouvant être appelées directement ou indirectement à partir des points d'entrée du programme, y compris les routines appartenant à d'autres programmes, en particulier celles de librairies.

Sous cette hypothèse, le procédé de détermination statique de l'empreinte décrit ci-dessus s'étend comme suit : au lieu d'analyser et de transformer chaque routine individuellement, on les transforme toutes en même temps, en traitant les instructions d'appel de routines (« invoke », « call », etc.) comme des branchements inconditionnels à la première instruction de la routine appelée, et les instructions de retour d'appel (« return », etc.) comme des branchements vers les instructions suivant immédiatement l'appel correspondant.

En d'autres termes, on travaille non plus sur le graphe de flot de contrôle de la routine, mais sur le graphe de flot de contrôle interprocédural, contenant des arcs supplémentaires correspondant aux instructions d'appel et de retour de routine. On notera que pour les instructions qui déterminent dynamiquement la routine à appeler effectivement (comme par exemple l'appel de méthode virtuelle ou de méthode d'interface), on ajoute des arcs de et vers toutes les routines en lesquelles l'appel peut se résoudre dynamiquement. Par exemple, dans la JVM, une approximation simple de l'ensemble des méthodes cibles de « invokevirtual C.m », est l'ensemble des méthodes « m » définies dans la classe « C » ou l'une de ses sous-classes. (On peut obtenir de meilleures approximations de cet ensemble à l'aide d'analyses statiques de flot de contrôle.)

Le procédé décrit ci-dessus dans le cas d'un routine, appliqué à ce graphe interprocédural, va insérer les ajustements d'empreintes nécessaires pour que la valeur de l'empreinte soit la même à tous les sites d'appel d'une même routine, et à la fin de toutes les routines susceptibles d'être appelées depuis le même site d'appel.

Le problème de l'approche globale ci-dessus est que l'hypothèse selon laquelle on connaît le code de toutes les routines est parfois trop forte : on connaît le code des méthodes du package en cours de transformation, mais pas forcément celui des routines de librairies ou partagé avec d'autres programmes.

Une première solution est de préserver la valeur de l'empreinte à travers les appels à des routines qui ne font pas partie du programme, par exemple en sauvant et restaurant la variable « trace » autour de ces appels.

Une autre solution, qui permet également de faire l'économie de l'analyse de flot interprocédurale, consiste à établir le « contrat » suivant entre toutes les routines : pour chaque routine de nom « r », si la valeur de l'empreinte est « E(r) » à l'entrée dans la routine, alors la valeur de l'empreinte est « S(r) » à la sortie de la routine. Ici, « E » et « S » sont des fonctions associant des valeurs d'empreinte arbitraires à des noms de routines, par exemple calculées par hachage cryptographique. La signature de la routine (type de ses arguments et de la valeur de retour) peut aussi être associée au nom, notamment si elle permet de distinguer des routines sans rapport entre elles. Le « contrat » ci-dessus est simple à assurer : avant chaque instruction d'appel à une routine « r », on insère un ajustement de l'empreinte pour l'amener à la valeur « E(r) » ; et pour chaque instruction de retour d'appel, on insère de même un ajustement de l'empreinte pour l'amener à la valeur « S(r) ».

Ce principe s'étend au cas de méthodes déterminées dynamiquement au moment de l'appel. Par exemple, dans le cas de « Java » ou de « Java Card », on peut employer des paires « (m, s) » où « m » est un nom de méthode et « s » une signature de méthode. Des hachages de cette paire permettent de définir « E(m,s) » et « S(m,s) ». On peut noter que si une méthode virtuelle en redéfinit une autre, ces deux méthodes ont même nom et même signature, donc mêmes valeurs « E » et « S ». Le « contrat » sur les empreintes à l'appel et au retour de méthodes s'applique ainsi de même manière.

Dans la mesure où seuls sont pris en compte les noms des routines (et éventuellement leur signature), la détermination des valeurs d'empreinte peut s'effectuer routine par routine, sans connaître l'intégralité du programme. La sortie prématurée d'une routine via une exception non rattrapée ne pose pas de problème supplémentaire, sous l'hypothèse que la machine virtuelle (implicitement) ou le gestionnaire d'exception (explicitement) réinitialise toujours l'empreinte à une valeur constante connue lorsqu'une exception est déclenchée.

Au lieu de demander au programmeur d'indiquer explicitement dans le source les endroits où une vérification de l'empreinte doit être effectuée (par exemple avec des appels explicites à « checkTrace() »), ces vérifications peuvent aussi être insérées automatiquement par un outil de transformation du code.

Par exemple, dans le cas de la JCVM, on peut effectuer un contrôle :
- avant chaque instruction qui écrit en mémoire persistante (EEPROM) : écriture dans un champ de classe (« putstatic ») ou de d'instance (« putfield »), écriture dans un tableau (« x-astore »),
- au début et à la fin de chaque transaction,
- avant l'appel de certaines méthodes de librairie, etc.

Cela permet notamment de mettre en place une politique de contrôle d'intégrité d'exécution qui considère que le programme peut exécuter n'importe quelles opérations, éventuellement perturbées, tant qu'il ne cherche pas à modifier la valeur des données persistantes et à faire des entrées-sorties.

La stratégie d'insertion automatique des vérifications d'empreintes est facile à changer, puisqu'elle affecte uniquement la phase de transformation du code. Elle résulte en pratique d'un compromis à trouver entre la fréquence des vérifications et l'augmentation de la taille du code et du temps d'exécution dus aux opérations « checkTrace ».

Plutôt que de modifier explicitement le programme par insertion d'instructions dans le code (par exemple pour appeler des routines du type « addTrace », « checkTrace », « adjustTrace » et « setTrace »), les données de prise et de contrôle d'empreinte peuvent être stockées dans des tables indépendantes au code exécutable du programme. Ces données peuvent comprendre les points de programme où une opération d'empreinte est effectuée ainsi que les valeurs associées (les arguments de ces opérations). C'est la machine d'exécution (par exemple une machine virtuelle) qui se charge alors d'effectuer ces opérations lorsque le point de programme courant passe par les points de programme mémorisés dans les tables.

Plutôt que l'argument effectif d'une opération d'empreinte, les tables peuvent aussi stocker des valeurs qui indiquent quelles données dynamiques prendre en compte dans l'opération. Par exemple, une entrée complexe correspondant à « addTrace » peut indiquer de mettre à jour l'empreinte avec la valeur courante d'une variable ou d'un registre de la machine (parce que sa valeur est connu statiquement).

Un avantage de cette approche est de réduire l'encombrement mémoire des informations de calculs et de contrôle d'empreinte. En revanche, elle peut être coûteuse en temps d'exécution du fait des parcours de table. En cas de problème de performance, on peut employer une approche mixte : certaines opérations sont calculées automatiquement par la machine d'exécution ; d'autres opérations sont insérées explicitement dans le code du programme ; d'autres opérations encore sont stockées dans des tables. Par exemple, l'opération « addTrace » peut être calculée par une machine virtuelle ; les opérations « checkTrace » et « setTrace » peuvent être exprimées par des appels de routine explicites ; et « adjustTrace » peut être implémentée par une recherche en table. De plus, pour des raisons d'efficacité, la recherche en table pour « adjustTrace » peut n'être effectuée que dans le cas où un branchement est pris (en supposant les ajustements effectifs pratiqués uniquement dans ces cas-là).

Dans la mesure où les opérations de calculs et de contrôle d'empreinte ne sont pas standardisées, un programme instrumenté comme décrit ci-dessus pour le contrôle d'intégrité d'exécution peut ne pas fonctionner sur les plates-formes d'exécution qui ne sont pas adaptées.

Dans le cas où le code fait explicitement apparaître des appels de routine sur les empreintes (du type « addTrace », « checkTrace », « adjustTrace » et « setTrace »), le programme peut être accompagné d'une librairie qui implémente ces routines. Il sera alors portable sur toutes les plates-formes d'exécution. Toutefois, si la plate-forme dispose d'une implémentation plus efficace, elle peut la substituer à celle fournie avec le programme

Dans le cas d'un codage des prises et contrôles d'empreintes dans des tables, le programme est davantage portable. Par exemple, dans le cas de d'une JCVM, les tables peuvent être fournies sous forme de composants personnalisés supplémentaires : soit la machine les reconnaît et les exploite ; soit elle ne les reconnaît pas et les ignore (et dans ce cas ne pratique pas de vérification d'intégrité d'exécution).

## Revendications

1. Procédé implémenté dans un ordinateur de contrôle d'intégrité d'exécution d'un programme par vérification d'empreintes de traces d'exécution, ladite empreinte étant une valeur représentative des points de contrôle déterminés par lesquels passe l'exécution dudit programme, ce procédé comportant le calcul de la valeur numérique de l'empreinte, la comparaison de cette valeur à une valeur attendue et la réalisation d'un traitement particulier dans le cas où ladite valeur de l'empreinte diffère de la valeur attendue, **caractérisé en ce qu'**il comprend:
- l'affectation d'une valeur initiale à l'empreinte,
- la mise à jour de l'empreinte d'un chemin d'exécution,
- l'ajustement de l'empreinte le long des chemins d'exécution avant d'atteindre certains points de convergence du flot de contrôle de manière à rendre égales les empreintes des chemins convergents,
- la comparaison de ladite empreinte calculée dynamiquement à une valeur attendue fixée statiquement, égale à la valeur que doit avoir l'empreinte si l'exécution du programme n'est pas perturbée en des points déterminés du programme,
- la réalisation d'un traitement particulier dans le cas où l'empreinte courante diffère de la valeur attendue, ledit traitement particulier du programme dans le cas où l'empreinte courante diffère de la valeur attendue consistant à sécuriser certaines données ou à avertir l'utilisateur du dysfonctionnement par un signal sonore ou visuel ou à interrompre, définitivement ou non, l'exécution dudit programme.

2. Procédé selon la revendication 1, **caractérisé en ce que** ladite empreinte ne porte que sur des fragments de code critiques du programme.

3. Procédé selon la revendication 1, **caractérisé en ce que** ladite empreinte est calculée incrémentalement le long du chemin d'exécution du programme par composition successive d'une fonction dont un argument est la valeur courante de l'empreinte et un autre argument est une valeur représentative de l'exécution locale du programme ou une expression qui porte sur des données dynamiques du programme.

4. Procédé selon la revendication 3, **caractérisé en ce que** ladite fonction consiste en l'une des fonctions suivantes: somme de contrôle («checksum»), congruence linéaire, contrôle de redondance cyclique (CRC), hachage cryptographique (« digest »), ou combinaison des opérations suivantes: addition, soustraction, «ou» logique exclusif (« xor ») avec une constante ou avec ladite donnée d'observation, rotation d'un nombre constant de bits, multiplication par une constante impaire.

5. Procédé selon la revendication 1, **caractérisé en ce que** l'opération d'ajustement consiste en une combinaison des fonctions suivantes: affectation à une valeur constante, addition avec une constante, « ou » logique exclusif (« xor ») avec une valeur constante.

6. Procédé selon la revendication 1, **caractérisé en ce que**, en certains points du programme, l'empreinte est affectée à une certaine valeur plutôt que déduite de la valeur d'empreinte précédente.

7. Procédé selon la revendication 6, **caractérisé en ce que** lesdits points de programme sont ceux où conflue un nombre de branches d'exécution supérieur à un certain seuil ou ceux qui sont les points d'entrée de subroutines ou de gestionnaires d'exception, et **en ce que** ladite valeur affectée est une valeur donnée ou une valeur quelconque déterminée par tirage aléatoire ou une expression de programme déterminée par une analyse préalable comme invariante au point de programme considéré.

8. Procédé selon la revendication 1, **caractérisé en ce que** la valeur de l'empreinte est comparée à la valeur attendue en des points du programme déterminés par leur caractéristique particulière dans le graphe de flot de contrôle dudit programme ou par la nature des opérations effectuées auxdits points de programme.

9. Procédé selon la revendication 8, **caractérisé en ce que** lesdits points de programme sont situés après chaque branchement ou avant chaque point de jointure du flot de contrôle ou avant chaque opération qui écrit en mémoire persistante ou avant certaines opérations cryptographiques ou avant l'appel de certaines routines de librairie ou après l'appel de certaines routines de librairie.

10. Procédé selon l'une des revendications 1 à 9, **caractérisé en ce que** la prise d'empreinte (calcul, mise à jour, ajustement, affectation) ou le contrôle d'empreinte sont réalisés:
- explicitement par une instrumentation du code du programme, ou
- explicitement par la machine d'exécution (machine virtuelle ou processeur de la plate-forme d'exécution), sur la base d'informations complémentaires au programme qui indiquent à ladite machine d'exécution en quels points de programme ou avec quelles valeurs (y compris des valeurs résultant d'opérations complexes) effectuer des opérations de prise ou de contrôle d'empreinte, ou
- implicitement par la machine d'exécution (machine virtuelle ou processeur de la plate-forme d'exécution), sur la base d'une observation particulière des instructions exécutées.

11. Procédé selon la revendication 10, **caractérisé en ce que** ladite instrumentation du code du programme est basée sur la manipulation explicite d'une variable ou d'un registre représentant l'empreinte ou sur l'appel à des routines spécialisées ou sur l'emploi d'instructions spécialisées de la machine d'exécution.

12. Procédé selon la revendication 10, **caractérisé en ce que** lesdites informations complémentaires sont codées dans des tables qui associent des points de programmes à un code définissant l'opération à réaliser et qui ne sont consultées par la machine d'exécution que lors de l'exécution d'instructions particulières.

13. Procédé selon la revendication 12, **caractérisé en ce que** lesdites instructions particulières sont des branchements ou des écritures en mémoire persistante ou des appels à certaines routines ou certaines opérations cryptographiques.

14. Procédé selon la revendication 1, **caractérisé en ce que** les valeurs attendues de l'empreinte et des ajustements d'empreinte en des points donnés du programme sont déterminées par une analyse statique du code du programme (source ou objet), l'analyse statique modifiant le code du programme pour rendre les valeurs d'empreinte prévisibles ou pour les contrôler.

15. Procédé selon la 7, **caractérisé en ce que** sont fournies à ladite analyse des informations concernant la mise à jour d'empreinte (points de programme et nature des observations de l'exécution en ce point de programme) ou l'ajustement d'empreinte (points de programme où l'empreinte doit être ajustée à une certaine valeur) ou l'affectation d'empreinte (points de programme où l'empreinte doit être forcée à une valeur) ou le contrôle d'empreinte (points de programme où l'empreinte doit être contrôlée), ces informations:
- étant déterminées automatiquement, ou
- étant données sous forme de directives consistant en des instructions placées dans le code du programme et opérant sur l'empreinte (telles que des appels de routine, prenant ou non en argument un entier quelconque) ou étant fournies sous forme de tables complémentaires au programme,
- et pouvant être complétées ou modifiées selon les valeurs calculées par ladite analyse.

16. Procédé selon la revendication 15, **caractérisé en ce que**, pour chaque routine du programme, les valeurs d'empreinte attendues sont déterminées par la séquence opératoire suivante:
Initialisation de l'ensemble des points de programme à explorer au singleton constitué de la première instruction de la routine.
Mémorisation au point d'entrée de la routine d'une valeur d'empreinte égale à la valeur initiale donnée de l'empreinte.
Tant que ledit ensemble des points de programme à explorer n'est pas vide:-Extraction d'un point de programme (le point d'origine) dudit ensemble des points de programme à explorer.
Pour chacun des points de programme résultants possibles après exécution de l'instruction (les points cibles):
* Si le point cible comporte une affectation d'empreinte et si ce point cible n'a pas encore été exploré, mémorisation au point cible de la valeur d'empreinte définie par l'affectation.
* Si le point cible ne comporte pas d'affectation d'empreinte et si ce point cible a déjà été exploré, insertion entre l'instruction au point d'origine et l'instruction au point cible d'un ajustement d'empreinte qui envoie la valeur de l'empreinte au point d'origine sur la valeur de l'empreinte mémorisée au point cible.
* Si le point cible ne comporte pas d'affectation d'empreinte et si ce point cible n'a pas encore été exploré, mémorisation au point cible de la valeur de l'empreinte au point d'origine, modifiée par une mise à jour d'empreinte s'il y en a une entre le point d'origine et le point cible.
* Si le point cible n'a pas encore été exploré, ajout dudit point cible dans ledit ensemble des points de programme à explorer.

17. Procédé selon l'une des revendications 15, **caractérisé en ce que** d'une part l'empreinte porte sur l'exécution complète du programme (y compris avec appels de routines) à partir de ses points d'entrée et d'autre part le procédé selon étant appliqué à un ensemble de routines en traitant les instructions d'appel statique de routine comme des branchements inconditionnels à la première instruction de la routine appelée, les instructions d'appel dynamique de routine comme des branchements conditionnels à la première instruction de la routine appelée correspondante, et les instructions de retour d'appel comme des branchements vers les instructions suivant immédiatement l'appel correspondant.

18. Procédé selon la revendication 10, **caractérisé en ce que** le programme ou la machine d'exécution sont instrumentés pour que l'empreinte soit sauvegardée à l'appel de certaines routines (telles que celles qui ne font pas partie du programme ou qui ne sont pas analysables) et restaurée au retour de l'appel.

19. Procédé selon la revendication 10, **caractérisé en ce que** le programme ou la machine d'exécution sont instrumentés pour que l'empreinte soit ajustée à l'appel et au retour de certaines routines (y compris dans le cas de routines déterminées dynamiquement au moment de l'appel) de manière à être égale:
- à l'entrée de la routine appelée: à une valeur qui dépend du nom ou de la signature de la routine appelée (telle qu'une valeur obtenue par hachage cryptographique du nom ou de la signature),
- après retour dans la routine appelante: à une valeur qui dépend de la même manière du nom ou de la signature de la routine appelée, chaque gestionnaire d'exception concerné par l'appel de routine (c'est-à-dire pouvant être atteint lors de la levée d'une exception dans la routine appelée) devant affecter l'empreinte à une valeur déterminée.

20. Procédé selon la revendication 2, **caractérisé en ce que** l'empreinte est mise à jour implicitement par une machine d'exécution et **en ce que**, dans ce cas:
- la prise d'empreinte peut être temporairement suspendue pour éviter des calculs inutiles lors de l'exécution de fragments de code non critiques du programme ou lors de l'exécution de certaines routines n'effectuant pas de contrôle d'empreinte;
- la prise d'empreinte, lorsqu'elle n'est pas suspendue, porte sur chaque instruction exécutée,
* y compris certains de ses arguments immédiats ou certains des invariants du programme pour cette instruction (tels que la hauteur de la pile d'opérande ou la présence de valeurs de certains types dans la pile d'opérande) ou les choix de branches effectués dans le cas où l'instruction est un branchement,
* mais à la condition que l'instruction exécutée appartienne à une classe donnée des instructions à observer, ladite classe étant fixe pour la machine d'exécution ou bien donnée par une table associant à tout code d'instruction un booléen indiquant si l' instruction est à observer, et ladite table étant spécifique à différentes routines ou différents programmes.

21. Procédé selon la revendication 10, **caractérisé en ce que**:
- certaines opérations sur l'empreinte (telles que l'affectation et le contrôle d'empreinte) sont insérées explicitement dans le code du programme;
- certaines opérations sur l'empreinte (telles que l'ajustement d'empreinte) sont effectuées explicitement par la machine d'exécution en fonction d'informations complémentaires au programme;
- certaines opérations sur l'empreinte (telles que la mise à jour d'empreinte) sont effectuées implicitement par la machine d'exécution.

22. Procédé selon la revendication 10, **caractérisé en ce que**:
- dans le cas où des opérations de prise ou de contrôle d'empreinte sont effectuées par des appels de routine, le programme est accompagné d'une librairie qui implémente ces routines, ladite librairie étant pouvant être substituée par une implémentation particulière lors du chargement sur une plate-forme d'exécution,
dans le cas où les opérations de prise et de contrôle d'empreinte sont exprimées par des informations complémentaires au programme et où la plate-forme d'exécution ne sait pas ou ne peut pas ou ne veut pas exploiter ces informations, lesdites informations sont ignorées pour permettre l'exécution sans le contrôle d'intégrité.

23. Procédé selon la revendication 18, **caractérisé en ce que** la machine d'exécution du programme dispose d'instructions spécialisées pour le calcul d'empreinte ou la mise à jour d'empreinte ou l'ajustement d'empreinte ou l'affectation d'empreinte ou le contrôle d'empreinte ou la sauvegarde d'empreinte à l'appel d'une routine et la restauration d'empreinte au retour d'une routine, ces instructions apparaissant explicitement dans le code du programme ou étant utilisées pour mettre en oeuvre la machine d'exécution.

24. Système d'exécution permettant le contrôle d'intégrité d'exécution, **caractérisé en ce que** ledit système inclut un microprocesseur qui dispose d'instructions spécialisées pour le calcul d'empreinte ou la mise à jour d'empreinte ou l'ajustement d'empreinte ou l'affectation d'empreinte ou le contrôle d'empreinte ou la sauvegarde d'empreinte à l'appel d'une routine et la restauration d'empreinte au retour d'une routine, conformément au procédé selon l'une des revendications 1 à 23.

## Patentansprüche

1. Ein in einem Computer implementiertes Verfahren zur Kontrolle der Integrität der Ausführung eines Programms durch Überprüfung der Signaturen der Ausführungsverfolgung, wobei besagte Signaturen einem repräsentativen Wert der Kontrollpunkte entsprechen, die besagtes Programm bei der Ausführung durchläuft und wobei das Verfahren zunächst den numerischen Wert der Signatur berechnet, um diesen dann mit einem erwarteten Wert zu vergleichen und schließlich eine besondere Verarbeitung auszuführen, falls besagter Wert der Signatur vom erwarteten Wert abweicht; dieses Verfahren ist **dadurch kennzeichnet, dass** es Folgendes umfasst:
- Zuordnung eines Anfangswerts für die Signatur,
- Aktualisierung der Signatur für einen Ausführungsweg,
- Anpassung der Signatur auf dem Ausführungsweg vor dem Erreichen bestimmter Konvergenzpunkte im Kontrollfluss auf eine Weise, dass die Signaturen der konvergierenden Wege angeglichen werden,
- Vergleich der dynamisch berechneten Signatur mit einem statisch festgelegten erwarteten Wert, der mit dem Wert der Signatur übereinstimmt, der vorliegen muss, wenn die Ausführung des Programms nicht an bestimmten vom Programm definierten Punkten unterbrochen wird,
- Ausführung einer besonderen Verarbeitung, falls die Signatur vom erwarteten Wert abweicht, wobei diese besondere Verarbeitung des Programms im Fall einer Abweichung der aktuellen Signatur vom erwarteten Wert darin besteht, bestimmte Daten zu sichern oder den Benutzer durch ein akustisches oder optisches Signal vor der Fehlfunktion zu warnen bzw. die Ausführung des Programms endgültig zu unterbrechen.

2. Verfahren nach Anspruch 1, das **dadurch gekennzeichnet ist, dass** sich die Signatur nur auf kritische Codefragmente des Programms bezieht.

3. Verfahren nach Anspruch 1, das **dadurch gekennzeichnet ist, dass** die Signatur entlang des Ausführungswegs des Programms schrittweise inkrementell berechnet wird, indem sukzessiv eine Funktion angewendet wird, deren eines Argument der aktuelle Wert der Signatur ist und deren anderes Argument dem repräsentativen Wert der lokalen Ausführung des Programms oder einem Ausdruck entspricht, der sich auf die dynamischen Daten des Programms bezieht.

4. Verfahren nach Anspruch 3, das **dadurch gekennzeichnet ist, dass** die besagte Funktion aus einer der folgenden Funktionen besteht: Prüfsumme ("checksum"), lineare Kongruenz, zyklische Redundanzprüfung (CRC), kryptographisches Hashing ("Digest") oder eine Kombination der folgenden Operationen: Addition, Subtraktion, exklusives "oder" ("xor") mit einer Konstanten oder mit den besagten Beobachtungsdaten, Umlauf einer konstanten Anzahl von Bits, Multiplikation mit einer ungeraden Konstanten.

5. Verfahren nach Anspruch 1, das **dadurch gekennzeichnet ist, dass** der Anpassungsvorgang aus einer Kombination der folgenden Funktionen besteht: Zuordnung zu einem konstanten Wert, Addition mit einer Konstanten, exklusives "oder" ("xor") mit einem konstanten Wert.

6. Verfahren nach Anspruch 1, das **dadurch gekennzeichnet ist, dass** die Signatur an gewissen Stellen des Programms einem bestimmten Wert zugeordnet und nicht aus dem vorherigen Wert der Signatur abgeleitet wird.

7. Verfahren nach Anspruch 6, das **dadurch gekennzeichnet ist, dass** es sich bei den besagten Punkten im Programm um diejenigen handelt, bei denen eine Anzahl von Ausführungsverzweigungen, die höher als eine bestimmte Untergrenze ist, oder aber diejenigen zusammenfließen, die die Eintrittspunkte von Subroutinen oder von Ausnahmeverarbeitungen darstellen, und das zudem **dadurch kennzeichnet ist, dass** besagter zugewiesener Wert einem gegebenen Wert oder einem beliebigen Wert entspricht, der durch ein Zufallsverfahren bzw. durch einen Programmausdruck bestimmt wird, der durch vorherige Analyse als zum entsprechenden Punkt im Programm invariant bestimmt wird.

8. Verfahren nach Anspruch 1, das **dadurch gekennzeichnet ist, dass** der Wert der Signatur mit dem erwarteten Wert der Punkte im Programm verglichen wird, die durch ihre besondere Eigenschaft im Steuerflussdiagramm des genannten Programms oder durch die Art der an den genannten Punkten im Programm durchgeführten Operationen bestimmt werden.

9. Verfahren nach Anspruch 8, das **dadurch gekennzeichnet ist, dass** sich die besagten Punkte im Programm nach jeder Verzweigung oder vor jedem Knotenpunkt des Steuerflusses oder vor jeder Operation, die in einen persistenten Speicher schreibt, oder vor bestimmten kryptographischen Operationen oder vor bzw. nach dem Aufruf bestimmter Routinen der Programmbibliothek befinden.

10. Verfahren nach einem der Ansprüche 1 bis 9, das **dadurch gekennzeichnet ist, dass** die Bestimmung der Signatur (Berechnung, Aktualisierung, Anpassung, Zuordnung) oder die Prüfung der Signatur durchgeführt wird:
- explizit durch eine Instrumentierung des Programmcodes oder
- explizit von der Ausführungsmaschine (virtuelle Maschine oder Prozessor der Ausführungsplattform) auf der Grundlage von Zusatzinformationen zum Programm, die der Ausführungsmaschine mitteilen, an welchen Punkten des Programms oder mit welchen Werten (einschließlich der Werte, die sich aus komplexen Operationen ergeben) die Vorgänge zum Bestimmen oder Kontrollieren der Signatur durchgeführt werden sollen, oder
- implizit durch die Ausführungsmaschine (virtuelle Maschine oder Prozessor der Ausführungsplattform), basierend auf einer bestimmten Beobachtung der ausgeführten Anweisungen.

11. Verfahren nach Anspruch 10, das **dadurch gekennzeichnet ist, dass** die Instrumentierung des Programmcodes auf der Grundlage einer expliziten Verarbeitung einer Variable oder eines Registers, die jeweils die Signatur darstellen, oder auf der Grundlage des Aufrufs spezieller Routinen oder der Verwendung von speziellen Anweisungen der Ausführungsmaschine erfolgt.

12. Verfahren nach Anspruch 10, das **dadurch gekennzeichnet ist, dass** besagte zusätzliche Informationen in Tabellen kodiert werden, die Programmpunkte mit einem Code verbinden, der die auszuführende Operation definiert, und die von der Ausführungsmaschine nur bei der Ausführung bestimmter Anweisungen abgefragt werden.

13. Verfahren nach Anspruch 12, das **dadurch gekennzeichnet ist, dass** die besonderen i5-Anweisungen Verzweigungen oder Schreibvorgänge im persistenten Speicher oder Aufrufe bestimmter Routinen oder kryptografischer Operationen sind.

14. Verfahren nach Anspruch 1, das **dadurch gekennzeichnet ist, dass** die erwarteten Werte der Signatur und der Anpassungen der Signatur an vorgegebenen Programmpunkten durch eine statische Analyse des Programmcodes (Quellcode oder Objektcode) bestimmt werden, wobei die statische Analyse den Programmcode modifiziert, um die Werte der Signaturen vorhersagbar zu machen oder um sie zu kontrollieren.

15. Verfahren nach Anspruch 7, das **dadurch gekennzeichnet ist, dass** besagter Analyse Informationen über die Aktualisierung der Signatur (Programmpunkte und Art der Beobachtungen der Ausführung an diesem Programmpunkt) oder die Einstellung des Abdrucks (Programmpunkte, bei denen muss die Signatur auf einen bestimmten Wert eingestellt werden) oder die Signatur zuordnung (Programmpunkte, bei denen die Signatur auf einen Wert gezwungen werden muss) oder die Signatur prüfung (Programmpunkte, bei denen die Signatur überprüft werden muss) zur Verfügung gestellt werden, wobei diese Information:
- automatisch ermittelt oder
- in Form von Anweisungen gegeben werden, die aus Anweisungen bestehen, die im Programmcode untergebracht sind und auf die Signatur einwirken (z. B. Aufrufe von Routine, unabhängig davon, ob eine ganze Zahl als Argument verwendet wird), oder in Form von Tabellen zusätzlich zum Programm bereitgestellt werden,
- entsprechend den von besagter Analyse berechneten Werten vervollständigt oder geändert werden.

16. Verfahren nach Anspruch 15, das **dadurch gekennzeichnet ist, dass** die erwarteten Signaturwerte für jede Programmroutine durch die folgende Verarbeitungsequenz bestimmt werden:
Initialisierung aller Programmpunkte, die in dem Entwurfsmuster untersucht werden sollen, das aus der ersten Anweisung der Routine besteht.
Speicherung am Einstiegspunkt der Routine eines Signaturwerts, der mit dem vorgegebenen Anfangswert der Signatur übereinstimmt.
Solange die besagte Gruppe der zu untersuchenden Programmpunkte nicht leer ist:
Extrahieren eines Programmpunkts (des Ursprungspunkts) aus der Gruppe der Programmpunkte, die untersucht werden sollen.
Für jeden der möglichen resultierenden Programmpunkte nach Ausführung der Anweisung (die Zielpunkte):
* Wenn dem Zielpunkt eine Signatur zugeordnet ist und dieser Zielpunkt wurde noch nicht untersucht, wird der durch die Zuordnung definierte Wert der Signatur am Zielpunkt gespeichert.
* Wenn dem Zielpunkt keine Signatur zugeordnet ist und dieser Zielpunkt wurde bereits untersucht, dann wird zwischen dem Befehl am Ursprungspunkt und dem Befehl am Zielpunkt eine Anweisung zur Anpassung der Signatur eingefügt, die den Wert der Signatur am Ursprungspunkt zum Wert der am Zielpunkt gespeicherten Signatur sendet.
* Wenn dem Zielpunkt keine Signatur zugeordnet ist und dieser Zielpunkt wurde noch nicht untersucht, dann wird der Wert der Signatur am Ursprungspunkt am Zielpunkt gespeichert, nachdem er durch eine Aktualisierung der Signatur geändert wurde, sofern es zwischen dem Ursprungspunkt und dem Zielpunkt eine Signatur gibt.
* Wenn der Zielpunkt noch nicht untersucht wurde, wird besagter Zielpunkt zur Gruppe der zu untersuchenden Programmpunkte hinzugefügt.

17. Verfahren nach einem der Ansprüche 15, das **dadurch gekennzeichnet ist, dass** sich einerseits die Signatur auf die vollständige Ausführung des Programms (einschließlich Routineaufrufe) ab seinen Einstiegspunkten bezieht und dass andererseits das entsprechende Verfahren dadurch auf eine Gruppe von Routinen angewendet wird, dass die statischen Aufrufbefehle von Routinen wie unbedingte Verzweigungen zur ersten Anweisung der aufgerufenen Routine, die dynamischen Aufrufbefehle wie bedingte Verzweigungen zur ersten Anweisung der entsprechenden aufgerufenen Routine und die Rückkehrbefehle wie Verzweigungen zu den Anweisungen behandelt werden, die dem entsprechenden Aufruf unmittelbar folgen.

18. Verfahren nach Anspruch 10, das **dadurch gekennzeichnet ist, dass** das Programm oder die Ausführungsmaschine so instrumentiert werden, dass die Signatur beim Aufruf bestimmter Routinen (z. B. solche, die kein Bestandteil des Programms sind oder nicht analysiert werden können) gespeichert und bei Rückkehr wiederhergestellt wird.

19. Verfahren nach Anspruch 10, das **dadurch gekennzeichnet ist, dass** das Programm oder die Ausführungsmaschine instrumentiert werden, damit die Signatur so an den Aufruf und an die Rückkehr von bestimmten Routinen (auch bei zum Zeitpunkt des Aufrufs dynamisch bestimmten Routinen) angepasst wird, dass sie:
- bei Eintritt in die aufgerufene Routine mit einem Wert übereinstimmt, der vom Namen oder der Signatur der aufgerufenen Routine abhängt (z. B. ein Wert, der durch kryptographisches Hashing des Namens oder der Signatur bestimmt wird),
- nach Rückkehr zur aufrufenden Routine mit einem Wert übereinstimmt, der in gleicher Weise vom Namen oder der Signatur der aufgerufenen Routine abhängt, wobei jede vom Aufruf der Routine betroffene Ausnahmebehandlung (d. h. die also beim Auslösen einer Ausnahme in der aufgerufenen Routine erreicht werden kann) der Signatur einen bestimmten Wert zuweist.

20. Verfahren nach Anspruch 2, das **dadurch gekennzeichnet ist, dass** die Signatur durch eine Ausführungsmaschine implizit aktualisiert wird und dass in diesem Fall:
- die Ermittlung der Signatur vorübergehend ausgesetzt werden kann, um unnötige Berechnungen bei der Ausführung unkritischer Codefragmente des Programms oder bestimmter Routinen zu vermeiden, die keine Kontrolle der Signatur durchführen;
- die Ermittlung der Signatur, wenn dies nicht ausgesetzt ist, für jede ausgeführte Anweisung erfolgt,
* einschließlich einiger ihrer unmittelbaren Argumente oder einiger der Invarianten des Programms für diese Anweisung (z. B. die Höhe des Operandenstapels oder die Existenz von Werten bestimmter Typen im Operandenstapel) oder die Auswahl der ausgeführten Verzweigungen, wenn es sich bei der Anweisung um eine Verzweigung handelt,
* aber unter der Voraussetzung, dass die ausgeführte Anweisung zu einer gegebenen Klasse von zu beachtenden Anweisungen gehört, wobei besagte Klasse für die Ausführungsmaschine festgelegt ist oder durch eine Tabelle vorgegeben wird, die jedem Anweisungscode einen Booleschen Wert zuordnet, der angibt, ob die Anweisung zu beachten ist, und wobei die Tabelle jeweils spezifisch für unterschiedliche Routinen oder Programme ist.

21. Verfahren nach Anspruch 10, das **dadurch gekennzeichnet ist, dass**:
- bestimmte Operationen mit der Signatur (z. B. Zuordnung und Kontrolle der Signatur) explizit in den Programmcode eingefügt werden;
- bestimmte Operationen mit der Signatur (wie z. B. die Anpassung der Signatur) von der Ausführungsmaschine explizit in Abhängigkeit von Zusatzinformationen zum Programm ausgeführt werden;
- bestimmte Operationen mit der Signatur (z. B. die Aktualisierung der Signatur) implizit von der Ausführungsmaschine durchgeführt werden.

22. Verfahren nach Anspruch 10, das **dadurch gekennzeichnet ist, dass**:
- das Programm, falls Operationen zum Ermitteln oder Kontrollieren der Signatur durch den Aufruf von Routinen durchgeführt werden, von einer Bibliothek begleitet wird, in der diese Routinen implementiert sind, wobei diese Bibliothek beim Laden auf einer Ausführungsplattform durch eine bestimmte Implementierung ersetzt werden kann,
- besagte Informationen, wenn die Operationen zum Ermitteln oder Kontrollieren der Signatur durch Informationen zusätzlich zum Programm ausgedrückt werden und die Ausführungsplattform diese Informationen nicht kennt oder nicht ausnutzen kann bzw. will , dann werden diese Informationen ignoriert, um eine Ausführung ohne Integritätskontrolle zu ermöglichen.

23. Verfahren nach Anspruch 18, das **dadurch gekennzeichnet ist, dass** die Programmausführungsmaschine über spezielle Anweisungen zum Berechnen, Aktualisieren, Anpassen, Zuordnen, Kontrollieren, Speichern der Signatur beim Aufrufen oder Wiederherstellen bei der Rückkehr vom Aufruf einer Routine verfügt, wobei diese Anweisungen explizit in den Programmcode eingefügt oder zur Implementierung der Ausführungsmaschine verwendet werden.

24. Ausführungssystem, das eine Prüfung der Integrität der Ausführung ermöglicht, das **dadurch gekennzeichnet ist, dass** das System einen Mikroprozessor beinhaltet, der bei Aufruf einer Routine spezielle Anweisungen zum Berechnen, Aktualisieren, Anpassen, Zuordnen, Kontrollieren oder Speichern von Signaturen und beim Wiederherstellen von Signaturen bei der Rückkehr von einer Routine gemäß einem der Verfahren nach einem der Ansprüche 1-23 durchführt.

## Claims

1. Method, implemented in a computer, for checking the execution integrity of a program by verifying execution trace prints, said print being a value that is representative of specified checkpoints of the execution of said program, said method comprising the calculation of the numeric value of the print, the comparison of said value with an expected value, and the specific processing in the event of said print value differing from the expected value, **characterized in that** it comprises:
- assigning an initial value to the print,
- updating the print of an execution path,
- adjusting the print along the execution paths before specific points of convergence of the control flow, in order to make the prints of converging paths uniform,
- comparing said dynamically calculated print with a statically fixed expected value that is equal to the value that the print should have if the execution of the program is not disrupted at specified points of the program,
- carrying out specific processing in the event of the current print differing from the expected value, said specific processing of the program in the event of the current print differing from the expected value consisting in securing particular data, or warning the user of the malfunction by means of an acoustic or visual signal, or interrupting, either permanently or not, the execution of said program.

2. Method according to claim 1, **characterized in that** said print relates only to critical code fragments of the program.

3. Method according to claim 1, **characterized in that** said print is calculated incrementally along the program execution path by means of successively composing a function of which one argument is the current value of the print, and of which another argument is a value that is representative of the local execution of the program or an expression that relates to dynamic data of the program.

4. Method according to claim 3, **characterized in that** said function consists of one of the following functions: checksum, linear congruence, cyclic redundancy check (CRC), cryptographic hash ("digest"), or a combination of the following operations: addition, subtraction, exclusive "or" logic ("xor") using a constant or using said observation data, rotation by a constant number of bits, multiplication by an odd-numbered constant.

5. Method according to claim 1, **characterized in that** the adjustment operation consists of a combination of the following functions: assignment to a constant value, addition with a constant, exclusive "or" logic ("xor") using a constant value.

6. Method according to claim 1, **characterized in that**, at particular points of the program, the print is assigned a particular value rather than deducted from the value of the previous print.

7. Method according to claim 6, **characterized in that** said program points are those at which a number of execution branches greater than a particular threshold converge, or those that constitute the subroutine or exception handling input points, and **in that** said assigned value is a specified value or a value that is determined, in some way, by means of random selection or a program expression that is determined by prior analysis as being invariable at the program point in question.

8. Method according to claim 1, **characterized in that** the print value is compared with the expected value at program points that are determined by their particular feature in the control flow graph of said program or by the type of operations carried out at said program points.

9. Method according to claim 8, **characterized in that** said program points are located after each jump, or before each junction point of the control flow, or before each operation that writes to the permanent memory, or before particular cryptographic operations, or before particular library routine calls, or after particular library routine calls.

10. Method according to any of claims 1 to 9, **characterized in that** the print is made (calculation, updating, adjustment, assignment) or the print is checked:
- explicitly by instrumentation of the program code, or
- explicitly by the execution machine (virtual machine or processor of the execution platform), on the basis of information complementary to the program that shows said execution machine the program points at which or the values (including values resulting from complex operations) using which operations for making or checking the print are to be carried out, or
- implicitly by the execution machine (virtual machine or processor of the execution platform), on the basis of an observation specific to the instructions executed.

11. Method according to claim 10, **characterized in that** said instrumentation of the program code is based on the explicit manipulation of a variable or of a register that represents the print, or on calling on specialized routines, or on using specialized instructions of the execution machine.

12. Method according to claim 10, **characterized in that** said complementary information is coded in tables that associate program points with a code that defines the operation to be carried out and that are consulted by the execution machine only when specific instructions are being executed.

13. Method according to claim 12, **characterized in that** said specific instructions are jumps or instances of writing to the permanent memory, or particular routine calls or particular cryptographic operations.

14. Method according to claim 1, **characterized in that** the expected values of the print and adjustments of the print at specified points of the program are determined by means of a static analysis of the program code (source or object), the static analysis modifying the program code in order to make the print values predictable or to check said values.

15. Method according to claim 7, **characterized in that** information regarding the print update (program points and type of observations of the execution at said program point) or the print adjustment (program points where the print has to be adjusted to a particular value), or the print assignment (program points where the print has to be forced to a value), or the print check (program points where the print has to be checked) is supplied to said analysis, said information:
- being determined automatically, or
- being data in the form of directives consisting of instructions that are placed in the program code and operate on the print (such as routine calls, either taking any integer as an argument or not), or being provided in the form of tables complementary to the program,
- and being able to be completed or modified according to the values calculated by said analysis.

16. Method according to claim 15, **characterized in that**, for each program routine, the expected print values are determined by means of the following operating sequence:
initialization of the set of program points to be browsed as a singleton consisting of the first instruction of the routine;
saving, at the routine input point, a print value that is equal to the initial specified value of the print;
as long as said set of program points to be browsed is not empty:
extracting a program point (the point of origin) of said set of program points to be browsed;
for each of the possible resultant program points after the instruction has been executed (the target points):
- if the target point has a print assignment and if said target point has not yet been browsed, saving, to the target point, the print value defined by the assignment;
- if the target point does not have any print assignment and if said target point has already been browsed, inserting, between the instruction at the point of origin and the instruction at the target point, a print adjustment that forwards the print value to the point of origin over the print value saved at the target point;
- if the target point does not have any print assignment, and if said target point has not yet been browsed, saving, to the target point, the print value at the point of origin, modified by a print update, if any, between the point of origin and the target point;
- if the target point has not yet been browsed, adding said target point into said set of program points to be browsed.

17. Method according to any of claims 15, **characterized in that** the print relates to the complete execution of the program (including with routine calls) from the input points thereof and, in addition, the method being applied to a set of routines by processing the static routine call instructions as jumps that are not conditional on the first instruction of the routine called, the dynamic routine call instructions as jumps conditional on the first instruction of the corresponding routine called, and the call return instructions as jumps to the instructions immediately following the corresponding call.

18. Method according to claim 10, **characterized in that** the program or the execution machine are instrumented such that the print is backed up when particular routines are called (such as those which are not part of the program or which cannot be analyzed) and is recovered when the call returns.

19. Method according to claim 10, **characterized in that** the program or the execution machine are instrumented such that the print is adjusted when particular routines are called and return (including in the case of routines that are determined dynamically at the moment of the call) so as to be equal:
- at the input of the routine called: to a value that depends on the name or the signature of the routine called (such as a value obtained by a cryptographic hash of the name or of the signature),
- after a return to the calling routine: to a value that depends, in the same manner, on the name or on the signature of the routine called, each exception handler affected by the routine call (i.e. being reachable when an exception in the routine called is lifted) having to assign the print to a specified value.

20. Method according to claim 2, **characterized in that** the print is updated implicitly by an execution machine, and **in that**, in this case:
- the process of making the print can be temporarily suspended in order to prevent unnecessary calculations during the execution of non-critical code fragments of the program or during the execution of particular routines that do not check the print;
- the process of making the print, when not suspended, relates to each instruction executed,
- including some of the immediate arguments thereof or some of the program invariants for said instruction (such as the height of the operand stack or the presence of values of particular types in the operand stack), or the choice of branches implemented in the event of the instruction being a jump,
- but on the condition that the instruction executed belongs to a specified class of the instructions to be observed, said class being invariant for the execution machine or being provided by a table associating every instruction code with a Boolean function indicating whether the instruction is to be observed, and said table being specific to different routines or different programs.

21. Method according to claim 10, **characterized in that**:
- particular operations on the print (such as assignment and checking of the print) are inserted explicitly into the program code;
- particular operations on the print (such as the print adjustment) are carried out explicitly by the execution machine depending on information complementary to the program;
- particular operations on the print (such as the print update) are carried out implicitly by the execution machine.

22. Method according to claim 10, **characterized in that**:
- in the event of operations for making or checking the print being carried out by routine calls, the program is accompanied by a library that implements said routines, said library being able to be substituted by a specific implementation when being loaded onto an execution platform,
- in the event of the operations for making and checking the print being expressed by information complementary to the program and in the event of the execution platform not knowing or not being able to or not wanting to make use of said information, said information is ignored so as to allow execution without an integrity check.

23. Method according to claim 18, **characterized in that** the program execution machine has specialized instructions available for calculating the print or for updating the print or for adjusting the print or for assigning the print or for checking the print or for backing up the print when a routine is called and for recovering the print when a routine returns, said instructions appearing explicitly in the program code or being used to bring the execution machine into operation.

24. Execution system making it possible to check execution integrity, **characterized in that** said system includes a microprocessor that has specialized instructions available for calculating the print or for updating the print or for adjusting the print or for assigning the print or for checking the print or for backing up the print when a routine is called and for recovering the print when a routine returns, in accordance with a method according to any of claims 1 to 23.
